# EUROPEAN PATENT SPECIFICATION

(11) **EP 4 215 443 B1**
(45) Date of publication and mention of the grant of the patent: **14.05.2025**
(21) Application number: 23152261.6
(22) Date of filing: 18.01.2023
(51) Int. Cl.: B64D 45/00, B64F 5/60, G05B 23/00, G07C 5/08, G08B 19/00, B64C 25/02

(54) **SYSTEMS AND METHODS FOR PROCESSING AIRCRAFT SENSOR DATA**
SYSTEME UND VERFAHREN ZUR VERARBEITUNG VON FLUGZEUGSENSORDATEN
SYSTÈMES ET PROCÉDÉS DE TRAITEMENT DE DONNÉES DE CAPTEUR D'AÉRONEF

(30) Priority: 19.01.2022 GB 202200652
(43) Date of publication of application: 26.07.2023
(73) Proprietor: Airbus Operations Limited, Bristol BS34 7PA (GB); Airbus (S.A.S.), 31700 Blagnac (FR)
(72) Inventor: BILL, Andrew, Bristol, BS34 7PA (GB); SMART, Colin, Bristol, BS34 7PA (GB)
(74) Representative: EIP

(56) References cited:
- EP-A1- 3 392 151
- EP-A2- 3 910 604
- WO-A1-2020/254277
- US-A1- 2012 053 784
- US-A1- 2015 066 288
- US-A1- 2016 144 983
- US-A1- 2021 174 612

## Description

### TECHNICAL FIELD

The present invention relates to a system including an aircraft and a computing system remote from the aircraft.

### BACKGROUND

Aircraft typically comprise many sensors to monitor the state of associated aircraft components, with the sensor data either provided directly to aircraft crew, or processed and provided to aircraft crew, to provide an indication as to the state of the aircraft components. Aircraft crew can then take appropriate action based on the state of the aircraft components.

EP3910604 discloses a wireless engine monitoring system for an aircraft engine includes a housing and wireless transceiver that receives engine data, including engine data relating to environmental engine emissions. The collected engine data is provided to a ground based receiver and processor that is configured to correlate the engine data to a phase of flight and determine a maintenance schedule on the basis of an analysis.

US2021/174612 discloses a method for maintaining an onboard reasoner for diagnosing failures on an aircraft that includes aircraft systems configured to report faults to the onboard reasoner. The method includes accessing diagnostic data received from an onboard computer of the aircraft that includes the onboard reasoner. An off-board reasoner builds an off-board diagnostic causal model that describes causal relationships between the failed tests and the diagnosed failure modes. EP3392151 discloses a system and method for operating an aircraft. The system includes a health and usage monitoring system (HUMS) system for sensing health and usage data during flight of the aircraft, and a data transmission unit. The data transmission unit retrieves HUMS data from the HUMS system and generates a trigger signal when the retrieved HUMS data meets a selected criterion, the trigger signal being indicative of a condition of the aircraft. In response to the trigger signal, the data transmission unit transmits the retrieved HUMS data to a remote location.

US2015/066288 discloses methods of predicting a speed brake fault in an aircraft having a speed brake system including multiple control surfaces, a handle for setting the position of the multiple control surfaces, and at least one control surface position sensor. The methods include receiving a position signal from the at least one position sensor, determining a variation in the position signal and predicting a fault in the speed brake system.

US2016/144983 discloses a system and method of identifying a fault in an aircraft having at least one monitored system, including receiving operational data for the at least one monitored system during at least a portion of a flight, receiving user input data from a user input corresponding to the operation of the at least one monitored system, and identifying an actual fault condition, by a controller, when the user input data is determined to be symptomatic of the identified possible fault condition.

### SUMMARY

A first aspect of the present invention provides a system comprising: an aircraft comprising a sensor, an aircraft component associated with the sensor, a first transmitter, and a first receiver; and a computing system remote from the aircraft, the computing system comprising one or more processors, a second transmitter, and a second receiver: wherein: the aircraft is configured to transmit, via the first transmitter, sensor data sensed by the sensor, to the computing system; the computing system is configured to: receive, via the second receiver, sensor data transmitted from the aircraft; process, using the one or more processors, the received sensor data to generate status data indicative of an operational mode of the aircraft component; transmit, when the status data is indicative of an altered operational mode of the aircraft component, the status data to the aircraft via the second transmitter; and the aircraft is configured to indicate, based at least partially on the status data received by the first receiver, the altered operational mode of the aircraft component, wherein the computing system is configured to indicate, based at least in part on the status data, a further altered operational mode of the aircraft component, the further altered operational mode comprising a lower priority than the altered operational mode.

Optionally, the sensor, the first transmitter, and the first receiver are located in a first safety environment on-board the aircraft, the first safety environment comprising a first development assurance level, and the second transmitter, the second receiver, and the one or more processors are located in a second safety environment of the computing system, the second safety environment comprising a second development assurance level the same as the first development assurance level.

Optionally, the sensor, the first transmitter and the first receiver, are located in a first data security environment on-board the aircraft, the first data security environment comprising a first security assurance level, and the second transmitter, the second receiver, and the one or more processors are located in a second data security environment of the computing system, the second data security environment comprising a second security assurance level the same as the first security assurance level.

Optionally, the sensor, the first transmitter, and the first receiver are located in a first safety environment on-board the aircraft, the first safety environment comprising a first development assurance level, and the second transmitter, the second receiver, and the one or more processors are located in a second safety environment of the computing system, the second safety environment comprising a second development assurance level different to the first development assurance level.

Optionally, the second development assurance level is lower than the first development assurance level.

Optionally, the first transmitter and the first receiver are located in a first data security environment on-board the aircraft, the first data security environment comprising a first security assurance level, and the second transmitter, the second receiver, and the one or more processors are located in a second data security environment of the computing system, the second data security environment comprising a second security assurance level different to the first security assurance level.

Optionally, the second security assurance level is lower than the first security assurance level.

Optionally, the aircraft is configured to encrypt the sensor data prior to transmitting the sensor data to the off-board computing system via the first transmitter; and the computing system is configured to decrypt, via the one or more processors of the computing system the sensor data received by the second receiver.

Optionally, the aircraft comprises one or more on-board processors configured to process sensor data of the aircraft component to obtain on-board status data indicative of a operational mode of the aircraft component associated with the sensor, and the aircraft is configured to, based at least in part on the on-board status data, and when the on-board status data is indicative of an altered operational mode of the aircraft component, indicate the altered operational mode of the aircraft component.

Optionally, the aircraft comprises a plurality of sensors each sensor configured to obtain respective sensor data associated with the aircraft component; the aircraft is configured to transmit, via the first transmitter, sensor data from each of the plurality of sensors to the computing system; the computing system is configured to receive, via the second receiver, the transmitted sensor data from each of the plurality of sensors; and the computing system is configured to process, via the one or more processors of the computing system, the received sensor data from each of the plurality of sensors to determine the status data indicative of the altered operational mode of the aircraft component.

Optionally, the sensor comprises at least one of a tire pressure monitoring sensor, a brake wear sensor, a tire tread sensor, a tire temperature sensor, a brake temperature sensor, an oleo strut pressure sensor, an oleo strut temperature sensor, an oleo strut compression angle sensor, an oleo strut compression speed sensor, and an oleo strut compression distance sensor.

Also disclosed is an aircraft comprising a sensor, an aircraft component associated with the sensor, a transmitter, and a receiver, wherein the aircraft is configured to: transmit sensor data from the sensor, via the first transmitter, to a computing system remote from the aircraft; receive, from the computing system and via the receiver, status data derived from the sensor data by one or more processors of the computing system, the status data indicative of an altered operational mode of the aircraft component; and indicate, based at least partially on the status data received by the first receiver, the altered operational mode of the aircraft component.

Also disclosed is an off-board computing system comprising one or more processors, a transmitter, and a receiver, wherein the off-board computing system is configured to: receive, via the receiver, sensor data from an aircraft, the sensor data associated with an aircraft component of the aircraft; process, using the one or more processors, the received sensor data to generate status data indicative of an operational mode of the aircraft component; and transmit, when the status data is indicative of an altered operational mode of the aircraft component and via the transmitter, the status data to the aircraft.

A second aspect of the present invention provides a method comprising: obtaining, via a sensor on-board an aircraft, sensor data associated with an aircraft component of the aircraft; transmitting the sensor data to an off-board computing system; processing, via one or more processors of the off-board computing system, the received sensor data to determine status data indicative of an operational mode of the aircraft component; transmitting, from the off-board computing system to the aircraft, and when the status data is indicative of an altered operational mode of the aircraft, the status data; and indicating, by the aircraft, the altered operational mode of the aircraft component, wherein the method comprises, processing, via one or more processors of the off-board computing system, the received sensor data to determine further status data indicative of a further operational mode of the aircraft component, and indicating, where the further operational mode of the aircraft component comprises a further altered operational mode of the aircraft component, and at the off-board computing system, the further altered operational mode of the aircraft component, the further altered operational mode comprising a lower priority than the altered operational mode.

Optionally, the method comprises scheduling, based at least in part on the status data, a maintenance action to be performed on the aircraft component.

Optionally, the method comprises scheduling, based at least in part on the further status data, a further maintenance action to be performed on the aircraft component.

Also disclosed is a system comprising: an aircraft comprising an on-board sensor, and an aircraft component associated with the sensor; and an off-board computing system: wherein the off-board computing system is configured to: receive sensor data transmitted from the aircraft; process the received sensor data to determine an altered operational mode of the aircraft component; and transmit a message indicative of the altered operational mode of the aircraft component to the aircraft; and the aircraft is configured to indicate, based at least in part on the message, the altered operational mode of the aircraft component.

### BRIEF DESCRIPTION OF THE DRAWINGS

Embodiments of the invention will now be described, by way of example only, with reference to the accompanying drawings, in which:
Figure 1 shows a schematic view of a first embodiment of a system comprising an aircraft and a remote computing system;
Figure 2 shows a schematic view of a second embodiment of a system comprising an aircraft and a remote computing system;
Figure 3 shows a flow diagram of a method in accordance with the systems of Figures 1 and 2; and
Figure 4 shows a schematic view of an example system in which the first and second embodiments can be practiced

### DETAILED DESCRIPTION

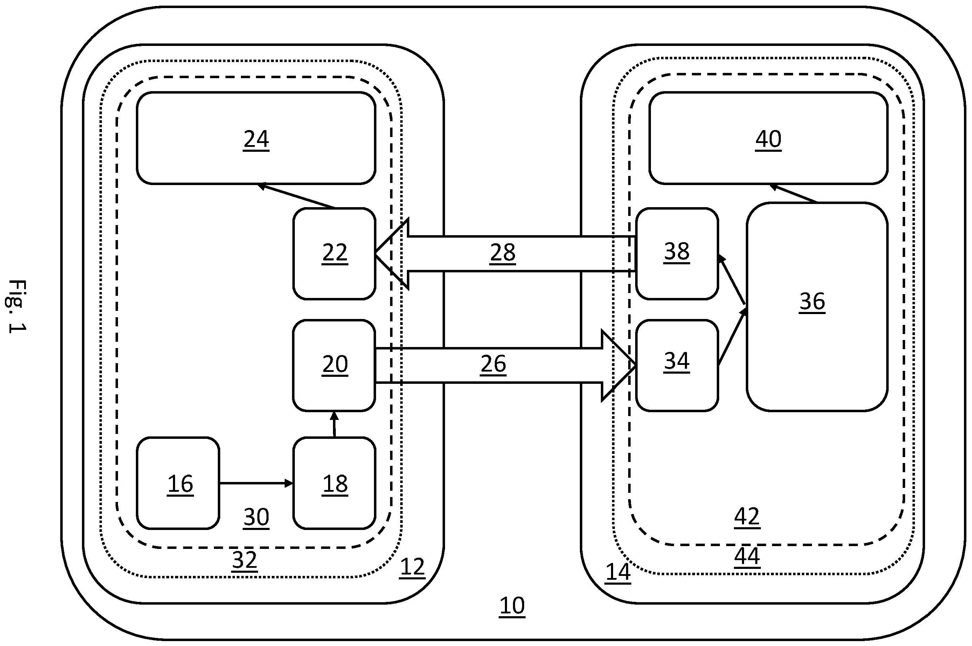

A first embodiment of a system 10 is illustrated schematically in Figure 1. The system 10 comprises an aircraft 12 and a computing system 14 remote from the aircraft 12, also referred to as an off-board computing system 14.

The aircraft 12 comprises an aircraft component 16, a sensor 18, a first transmitter 20, a first receiver 22 and a first indicator 24.

The aircraft component 16 in some examples is a tire of a wheel of the aircraft 12, although other aircraft components, for example brakes or the like, are also envisaged as part of the system 10. In some examples the sensor 18 is a pressure sensor configured to monitor a pressure of the tire. It will be appreciated that the form the sensor 18 is largely dependent on the associated aircraft component 16, and that sensors other than pressure sensors are envisaged. For example, the sensor 18 can also comprise a temperature sensor configured to directly and/or indirectly measure an internal gas temperature of the tire. Other forms of sensor 18 can include one or more of, a tire temperature sensor, a brake temperature sensor, an oleo strut pressure sensor, an oleo strut temperature sensor, an oleo strut compression angle sensor, an oleo strut compression speed sensor, and an oleo strut compression distance sensor. Arrays of more than one sensor 18 per aircraft component are also envisaged.

The first transmitter 20 is configured to communicate with the computing system 14, and in particular is configured to transmit sensor data 26 sensed by the sensor 18 to the computing system 14. Such transmission can occur in-flight of the aircraft 12, and/or when the aircraft 12 is on the ground. The first transmitter 20 can communicate wirelessly with the computing system 14 through any appropriate communications protocol, for example via a cellular, satellite and/or internet-based connection that enables long distance communication. In some examples the first transmitter 20 can communicate wirelessly with the computing system 14 via any of GateLink^{®}, WIFi^{®}, 4G, 5G, ACARS, or other satellite and/or cellular links. In some examples, the first transmitter 20 and the sensor 18 can be integrated as part of a sensing device.

The first receiver 22 is configured to communicate with the computing system 14, and in particular is configured to receive status data 28 from the computing system 14, as will be described in more detail hereafter. Such transmission can occur in-flight of the aircraft 12, and/or when the aircraft 12 is on the ground. The first receiver 22 can communicate wirelessly with the computing system 14 through any appropriate communications protocol, for example via a cellular, satellite and/ or internet-based connection that enables long distance communication.

Although illustrated here separately as first transmitter 20 and first receiver 22, it will be appreciated that in practice the first transmitter and the first receiver 22 may be combined as a transceiver. It will further be appreciated that the aircraft 12 may comprise a plurality of transmitters, receivers, and/or transceivers in practice.

The first indicator 24 is configured to be operable based on the status data 28 received by the first receiver 22 to provide an indication to aircraft crew. The first indicator 24 can take many forms, and in some examples can comprise one or more of a display, a light, and an audio emitter.

The sensor 18, the first transmitter 20, the first receiver 22, and the first indicator are located within a first safety environment 30 on-board the aircraft 12, and are also located in a first data security environment 32 on-board the aircraft 12. In some examples the first safety environment 30 comprises a development assurance level (DAL) of DAL B. DAL may be defined as in Aerospace Recommended Practice ARP4754 from SAE International as of 19 January 2022. In some examples, the first data security environment 32 comprises a security assurance level (SAL) of SAL 4. SAL may be defined as in Section 4.4 of document ED-203A produced by the European Organisation for Civil Aviation Equipment as of 19 January 2022.

The computing system 14 comprises a second receiver 34, a processor 36, a second transmitter 38, and a second indicator 40. As mentioned above, the computing system 14 is located remotely from the aircraft 12, and in some examples may be located in an aircraft maintenance hub or the like.

The second receiver 34 is configured to communicate with the aircraft 12, and in particular is configured to receive sensor data 26 from the aircraft 12, as will be described in more detail hereafter. Such transmission can occur in-flight of the aircraft 12, and/or when the aircraft 12 is on the ground. The second receiver 34 can communicate wirelessly with the aircraft 12 through any appropriate communications protocol, for example via a cellular, satellite and/or internet-based connection that enables long distance communication. The second receiver 34 is further configured to pass received sensor data 26 to the processor 36.

The processor 36 comprises at least one processor that is configured to process received sensor data 26 to determine the status data 28 which is indicative of an operational mode of the aircraft component 16. For example, the aircraft component 16 may comprise a normal operational mode in which the aircraft component 16 operates within normal or expected operating parameters, and one or more altered operational modes in which the aircraft component 16 operates outside the normal or expected operating parameters. Exemplary processing techniques to determine the operational mode are discussed in more detail hereinafter.

The second transmitter 38 is configured to communicate with the aircraft 12, and in particular is configured to transmit status data 28 determined by the processor 36 to the aircraft 12. Such transmission can occur in-flight of the aircraft 12, and/or when the aircraft 12 is on the ground. The second transmitter 38 can communicate wirelessly with the aircraft through any appropriate communications protocol, for example via a cellular, satellite and/or internet-based connection that enables long distance communication. In some examples the second transmitter 38 can communicate wirelessly with the aircraft 12 via any of GateLink^{®}, WIFi^{®}, 4G, 5G, ACARS, or other satellite and/or cellular links.

In some examples, the second transmitter 38 is configured to transmit the status data 28 to the aircraft where the status data 28 is indicative of an altered operational mode of the aircraft component 16. In some examples, the second transmitter 38 is configured to transmit the status data 28 to the aircraft where the status data 28 is indicative of a normal operational mode of the aircraft component 16.

The second indicator 40 is configured to be operable based on the status data 28 generated by the processor 36 to provide an indication to ground crew. The second indicator 40 can take many forms, and in some examples can comprise one or more of a display, a light, or an audio emitter.

The second receiver 34, the processor 36, the second transmitter 38, and the second indicator 40 are located within a second safety environment 42, and are also located in a second data security environment 44. In some examples the second safety environment 42 comprises a development assurance level (DAL) of DAL B. In some examples, the second data security environment 44 comprises a security assurance level (SAL) of SAL 4.

In use, the sensor 18 is configured to obtain sensor data 26 related to the aircraft component 16. For example, where the aircraft component 16 comprises a tire, and the sensor 18 comprises a pressure sensor configured to monitor a pressure of the tire, the pressure sensor can monitor a pressure of the tire when the aircraft 12 is either in-flight or on the ground, with the monitored pressure forming the sensor data 26.

The sensor data 26 is then transmitted, via the first transmitter 20, from the aircraft 12 to the computing system 14, and in particular to the second receiver 34. As mentioned above, any appropriate communication protocol can be utilised for the transmission of the sensor data 26. The received sensor data 26 is passed from the second receiver 34 to the processor 36 of the computing system 14.

The processor 36 can process the received sensor data 26 to generate status data 28 which is indicative of an operational mode of the aircraft 12. As mentioned above, the processing of the received sensor data 26 to generate the status data 28 can take several forms.

As one example, the processing of the received sensor data 26 can take the form of a comparison between the received sensor data 26 to a reference or expected value. For example, where the sensor data 26 comprises pressure measurements associated with a tire of the aircraft, the pressure measurements can be compared to a reference or expected pressure value to determine an operational mode of the tire, i.e. either a normal operational mode of the tire where the pressure matches or is within reference or expected tire pressure values for a given aircraft status, or an altered operational mode where the pressure does not match or is outside reference or expected tire pressure values for the given aircraft status.

As another example, the processing of the received sensor data 26 can utilise a model of the aircraft 12, or an aircraft subsystem associated with the aircraft component 16, to determine an operational mode of the aircraft component 16, with the received sensor data 26 forming an input for the model. Such a model can comprise variables associated with a number of aircraft components, including the aircraft component 16, and connections between the variables. In some examples, such connections can take the form of equations or the like. The model can be determined via appropriate experimentation and/or simulation. It will be appreciated that the nature of the model will depend on the aircraft components and sensors utilised, and so particular model details are not provided herein, but will be apparent without undue limitation to a person skilled in the art. To provide more detailed modelling it will be appreciated that in some examples sensor data from a number of aircraft components may be transmitted via the first transmitter 20 to the processor 36 via the second receiver 34.

As another example, the processing of the received sensor data 26 can utilise a machine learning model that takes the received sensor data 26 as an input and outputs an operational mode of the aircraft component 16 as an output. As with the model of the aircraft 12 or the aircraft subsystem discussed above, a number of sensor inputs associated with corresponding aircraft components may be utilised as inputs for such a machine learning model. The machine learning model can be trained using an appropriate training data set of sensor data parameters and ground truth labelled operational modes. In some examples, the machine learning model can comprise a neural network or the like.

In each of the examples mentioned above, the received sensor data 26 can be processed by the processor 36 to generate status data 28 which is indicative of an operational mode of the aircraft component 16. Where the status data 28 is indicative of an altered operational mode of the aircraft component 16, the status data 28 is transmitted from the computing system 14 to the aircraft 12, via the second transmitter 38 and the first receiver 22.

The first indicator 24 can then indicate, based at least in part on the status data 28, the altered operational mode of the aircraft component 16 to aircraft crew. In some examples the altered operational mode can comprise a relatively high priority, and transmitting the status data 28 to the aircraft 12 in such examples can enable aircraft crew to be alerted to relatively high priority altered operational modes of the aircraft component 16 and take appropriate remedial action. In some examples, aircraft crew can modify one or more operational parameters of the aircraft component 16 or other aircraft components to account for the altered operational mode of the aircraft component 16. For example, where the aircraft component 16 comprises a primary aircraft component, aircraft crew can revert to operation of a secondary aircraft component to perform the function previously provided by the primary aircraft component where an altered operational mode of the primary aircraft component has been indicated.

In some examples, such as where the altered operational mode of the aircraft component 16 is of a relatively low priority, aircraft crew can schedule a maintenance action, e.g. a future maintenance action, for the aircraft component 16 based on the indication by the first indicator 24.

In some examples, where the status data 28 is indicative of a relatively low priority altered operational mode of the aircraft component 16, the second indicator 40 can alternatively or additionally provide an indication of the altered operational mode of the aircraft component 16 to ground crew. Ground crew can then take appropriate remedial action, for example by scheduling a maintenance action to be performed on the aircraft component 16 to revert the aircraft component 16 to a normal operational mode.

In some examples, the computing system 14 can automatically schedule a maintenance action for the aircraft component 16 based at least in part on the status data 28 indicative of an altered operational mode of the aircraft component 16 and/or based at least in part on the indication provided by the second indicator 40.

In some examples, relatively high priority altered operational modes of the aircraft component 16 can comprise current altered operational modes of the aircraft component 16, for example operational modes that require imminent or immediate remedial action to correct. In some examples, relatively low priority altered operational modes of the aircraft component 16 can comprise future altered operational modes of the aircraft component 16, for example operational modes that may require future remedial action to correct.

In the manner described above, sensor data 26 from the sensor 18 is processed by the off-board computing system 14 to generate status data 28 which indicates an altered operational mode of the aircraft component 16. The status data 28 is transmitted to the aircraft 12, with an indication provided by the first indicator 24 which can enable aircraft crew to take appropriate remedial action. By conducting processing of the sensor data 26 using the off-board computing system 14, use of sensors that do not need to integrate or interface with existing on-board avionics may be enabled. This may enable new sensors with additional, improved and/or alternative functionality to existing sensors to be added to an aircraft in a relatively cost-effective and efficient manner, with minimal impact at an aircraft level. Given that the processing takes place at the off-board computing system 14, increased flexibility and ease of updating of the off-board computing system may be provided relative to having to update existing on-board avionics. By reducing the need for on-board avionics, aircraft weight and cost may be reduced.

As illustrated in the embodiment of Figure 1 and as discussed above, the sensor 18, the first transmitter 20, the first receiver 22, and the first indicator are located within a first safety environment 30 of DAL B on-board the aircraft 12, and are also located in a first data security environment 32 of SAL 4 on-board the aircraft 12. The second receiver 34, the processor 36, the second transmitter 38, and the second indicator 40 are located within a second safety environment 42 of DAL B, and are also located in a second data security environment 44 of SAL 4. Here the DAL of the first 30 and second 42 safety environments are the same, and SAL of the first data security environment 32 and the second data security environment 42 are the same. Maintaining a relatively high DAL and SAL level both at the aircraft 12 and the computing system 14 may facilitate transfer of sensor data 26 and status data 28 between the aircraft 12 and the computing system 14, and provide an assurance of the operation at the computing system 14. The sensor data 26 and status data 28 may also be encrypted via an appropriate security mechanism.

As mentioned briefly above, in some examples a plurality of aircraft components 16 and a number of sensors 18 can be provided, with sensor data from each sensor 18 being transmitted from the aircraft 12 to the computer system 14 via one or more transmitters, before being processed by the processor 36 to generate status data indicative of an operational mode of one or more of the aircraft components 16. One example of an aircraft component 16 mentioned above is a tire, with a corresponding sensor 18 being a tire pressure sensor. Other aircraft components can include brakes or the like, with other sensors 18 including brake wear sensors and/or tire tread sensors.

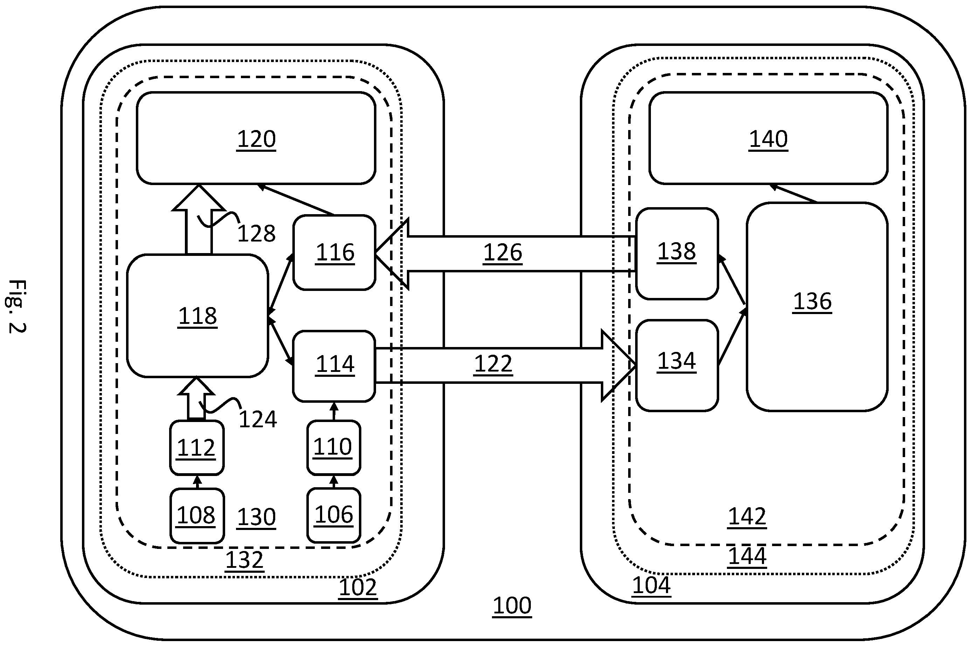

A second embodiment of a system 100 is illustrated schematically in Figure 2. Some components of the system 100 of Figure 2 are substantially similar to those of Figure 1.

The system 100 of Figure 2 comprises an aircraft 102 and a computing system 104 remote from the aircraft 102, also referred to as an off-board computing system 104.

The aircraft 102 comprises a first aircraft component 106, a second aircraft component 108, a first sensor 110, a second sensor 112, a first transmitter 114, a first receiver 116, processing avionics 118 and a first indicator 120.

In some examples, the first aircraft component 106 comprises a relatively low priority aircraft component, for example an aircraft component which is deemed noncritical to operation of the aircraft 102 if it were to operate in an altered operational mode, such as outside normal or expected operational parameters. In some examples, the second aircraft component 108 comprises a relatively high priority aircraft component, for example an aircraft component which is deemed critical to operation of the aircraft 102 if it were to operate in an altered operational mode, such as outside normal or expected operational parameters.

The first sensor 110 is associated with the first aircraft component 106, and is configured to sense one or more parameters associated with the first aircraft component 106 to provide first sensor data 122. The second sensor 112 is associated with the second aircraft component 108, and is configured to sense one or more parameters associated with the second aircraft component 108 to provide second sensor data 124.

The first transmitter 114 is configured to communicate with the computing system 104, and in particular is configured to transmit the first sensor data 122 sensed by the first sensor 110 to the computing system 104. Such transmission can occur in-flight of the aircraft 102, and/or when the aircraft 102 is on the ground. The first transmitter 114 can communicate wirelessly with the computing system 104 through any appropriate communications protocol, for example via a cellular, satellite and/or internet-based connection that enables long distance communication. In some examples, the first transmitter 114 and the first sensor 110 can be integrated as part of a sensing device.

The first receiver 116 is configured to communicate with the computing system 140, and in particular is configured to receive first status data 126 from the computing system 104, as will be described in more detail hereafter. Such transmission can occur in-flight of the aircraft 102, and/or when the aircraft 102 is on the ground. The first receiver 116 can communicate wirelessly with the computing system 104 through any appropriate communications protocol, for example via a cellular, satellite and/or internet-based connection that enables long distance communication.

Although illustrated here separately as first transmitter 114 and first receiver 116, it will be appreciated that in practice the first transmitter 114 and the first receiver 116 may be combined as a transceiver. It will further be appreciated that the aircraft 102 may comprise a number of transmitters, receivers, or transceivers in practice.

The processing avionics 118 comprises one or more processors which are configured to process received second sensor data 124 to determine second status data 128 which is indicative of an operational mode of the second aircraft component 108. For example, the second aircraft component 108 may comprise a normal operational mode in which the second aircraft component 108 operates within normal or expected operating parameters, and one or more altered operational modes in which the second aircraft component 108 operates outside the normal or expected operating parameters. Exemplary processing techniques to determine the operational mode can, in some examples, be similar to those discussed above in relation to the processor 36 of the computing system 14 of the system 10 of Figure 1.

In some examples, the processing avionics 118 can send the second status data 128 to the computing system 104 for further processing via the first transmitter 114, and/or can receive the first status data 126 for further processing from the computing system 104 via the first receiver 116.

The first indicator 120 is configured to be operable based on the first status data 126 and/or the second status data 128 to provide an indication to aircraft crew. The first indicator 120 can take many forms, and in some examples can comprise one or more of a display, a light, or an audio emitter. It will be appreciated that there may be a number of first indicators in practice, and indeed in some examples there may be a first indicator corresponding to each of the first 106 and second 108 aircraft components.

The first sensor 110, the second sensor 112, the first transmitter 114, the first receiver 116, the processing avionics 118 and the first indicator 120 are located within a first safety environment 130 on-board the aircraft 102, and are also located in a first data security environment 132 on-board the aircraft 102. In some examples the first safety environment 130 comprises a development assurance level (DAL) of DAL B. In some examples, the first data security environment 132 comprises a security assurance level (SAL) of SAL 4.

The computing system 104 comprises a second receiver 134, a processor 136, a second transmitter 138, and a second indicator 140. As mentioned above, the computing system 104 is located remotely from the aircraft 102, and in some examples may be located in an aircraft maintenance hub or the like.

The second receiver 134 is configured to communicate with the aircraft 102, and in particular is configured to receive the first sensor data 122 from the aircraft 102, as will be described in more detail hereafter. Such transmission can occur in-flight of the aircraft 102, and/or when the aircraft 102 is on the ground. The second receiver 134 can communicate wirelessly with the aircraft 102 through any appropriate communications protocol, for example via a cellular, satellite and/or internet-based connection that enables long distance communication. The second receiver 134 is further configured to pass received first sensor data 122 to the processor 136.

The processor 136 comprises at least one processor that is configured to process received first sensor data 122 to determine the first status data 126 which is indicative of an operational mode of the first aircraft component 106. For example, the first aircraft component 106 may comprise a normal operational mode in which the first aircraft component 106 operates within normal or expected operating parameters, and one or more altered operational modes in which the first aircraft component 106 operates outside the normal or expected operating parameters. Exemplary processing techniques to determine the operational mode can, in some examples, be similar to those discussed above in relation to the processor 36 of the computing system 14 of the system 10 of Figure 1.

The second transmitter 138 is configured to communicate with the aircraft 102, and in particular is configured to transmit the first status data 126 determined by the processor 136 to the aircraft 102. Such transmission can occur in-flight of the aircraft 102, and/or when the aircraft 102 is on the ground. The second transmitter 138 can communicate wirelessly with the aircraft through any appropriate communications protocol, for example via a cellular, satellite and/or internet-based connection that enables long distance communication.

In some examples, the second transmitter 138 is configured to transmit the first status data 126 to the aircraft where the first status data 126 is indicative of an altered operational mode of the first aircraft component 106. In some examples, the second transmitter 138 is configured to transmit the first status data 126 to the aircraft 102 where the first status data 126 is indicative of a normal operational mode of the first aircraft component 106.

The second indicator 140 is configured to be operable based on the first status data 126 generated by the processor 136 to provide an indication to ground crew. The second indicator 140 can take many forms, and in some examples can comprise one or more of a display, a light, or an audio emitter. As indicated above, in some examples second status data 128 can be received by the computing system from the processing avionics 118 of the aircraft 102. In such examples, the second indicator 140 is configured to be operable based on the second status data 128 generated by the processing avionics 128 to provide an indication to ground crew.

The second receiver 134, the processor 136, the second transmitter 138, and the second indicator 140 are located within a second safety environment 142, and are also located in a second data security environment 144. In some examples the second safety environment 142 comprises a development assurance level (DAL) lower than that of the first safety environment 130 on-board the aircraft 102. In some examples the second safety environment 142 comprises a DAL of DAL C or DAL E. In some examples, the second data security environment 144 comprises a security assurance level (SAL) ) lower than that of the first data security environment 132 on-board the aircraft 102. In some examples the second data security environment 144 comprises a SAL of SAL 3 or lower. A lower DAL and/or SAL level in the computing system 104 may be useful by reducing the certification requirements of the computing system 104, a high assurance environment is still provided in the aircraft including the processing avionics 118.

Such a difference between the first 130 and second 142 safety environments and/or between the first 132 and second 144 data security environments may be facilitated by encryption and decryption of data, such as the first sensor data 122 and the first status data 126, prior to and post transmission of such data between the aircraft 102 and the computing system 104. It will be appreciated that many encryption/decryption protocols may be suitable, and so details of such encryption/decryption is not provided here for the sake of brevity, but will be immediately apparent to a person skilled in the art without undue limitation.

In use, the first sensor 110 is configured to obtain first sensor data 122 related to the first aircraft component 106, and the second sensor 112 is configured to obtain second sensor data 124 related to the second aircraft component 108. As indicated above, the first aircraft component 106 can comprise a relatively low priority aircraft component, and the second aircraft component 108 can comprise a relatively high priority aircraft component. Thus the first sensor data 122 can comprise relatively low priority sensor data, whilst the second sensor data 124 can comprise relatively high priority sensor data.

For relatively low priority sensor data, such as the first sensor data 122, latency in data processing and/or interruptions in providing the data may be considered to be acceptable in certain circumstances. This may enable the first sensor data 122 to be transmitted, via the first transmitter 114, from the aircraft 102 to the computing system 104, and in particular to the second receiver 134. The received first sensor data 122 can then be processed by the processor 136 in a similar manner to that described above in relation to the processor 36 of the computing system 14 of the first embodiment of the system 10, to generate the first status data 126 which is indicative of an operational mode of the first aircraft component 106.

Where the first status data 126 is indicative of an altered operational mode of the first aircraft component 106, the first status data is transmitted from the computing system 104 to the aircraft 102, via the second transmitter 138 and the first receiver 116.

The first indicator 120 can then indicate, based at least in part on the first status data 126, the altered operational mode of the first aircraft component 106 to aircraft crew. As mentioned in relation to the system 10 of the first embodiment of Figure 1, aircraft crew can then take appropriate remedial action based on the indication of the altered operational mode of the first aircraft component 106, for example by scheduling an appropriate maintenance action.

Similarly, the second indicator 140 can alternatively or additionally provide an indication of the altered operational mode of the first aircraft component 106 to ground crew. Ground crew can then take appropriate remedial action, for example by scheduling a maintenance action to be performed on the first aircraft component 106 to revert the aircraft component 106 to a normal operational mode.

For relatively high priority sensor data, such as the second sensor data 124, latency in data processing and/or interruptions in providing the data may be considered to be unacceptable, for example where an altered operational state of the second aircraft component 108 is deemed to be critical to operation of the aircraft 102.

Thus the second sensor data 124 is processed using the on-board processing avionics 118 to generate the second status data 128 indicative of an operational mode of the second aircraft component 108. The first indicator 120 can then indicate, based at least in part on the second status data 128, an altered operational mode of the second aircraft component 108 to aircraft crew. As mentioned in relation to the system 10 of the first embodiment of Figure 1, aircraft crew can then take appropriate remedial action based on the indication of the altered operational mode of the first aircraft component 106. Such action can include, for example, aircraft crew reverting to operation of a further aircraft component to perform the function previously provided by the second aircraft component, or scheduling an appropriate maintenance action to take place.

It will be appreciated that the second embodiment of the system 100 of Figure 2 may also enable use of sensors that do not need to integrate with existing on-board avionics, which may enable new sensors with additional and/or alternative functionality to existing sensors to be added to an aircraft in a relatively cost-effective and efficient manner, with minimal impact at an aircraft level. The system 100 of Figure 2 also ensures that, for relatively high priority data and/or components, processing can remain on-board via the processing avionics 118, which may ensure data continuity, and reduce latency.

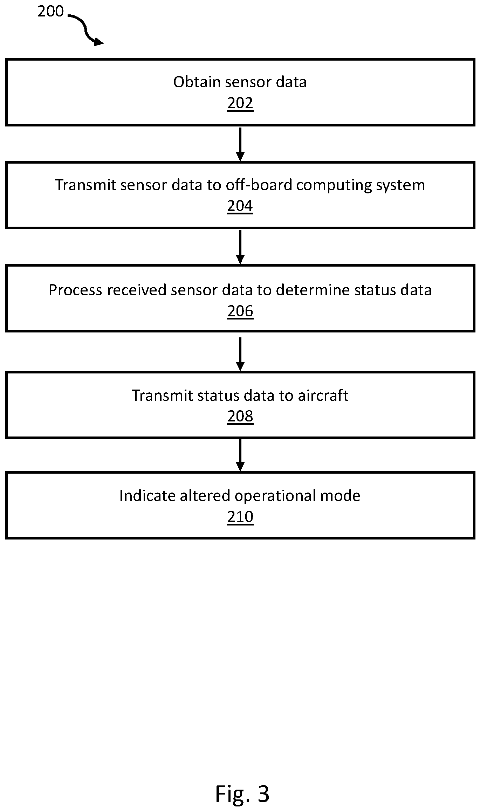

A method 200 in accordance with the first 10 and second 100 embodiments of the system is illustrated in the flow diagram of Figure 3.

The method 200 comprises obtaining 202, via a sensor on-board an aircraft, sensor data associated with an aircraft component of the aircraft.

The method 200 comprises transmitting 204 the sensor data to an off-board computing system.

The method 200 comprises processing 206, via one or more processors of the off-board computing system, the received sensor data to determine status data indicative of an operational mode of the aircraft component.

The method 200 comprises transmitting 208, from the off-board computing system to the aircraft, and when the status data is indicative of an altered operational mode of the aircraft, the status data.

The method comprises indicating 210, by the aircraft, the altered operational mode of the aircraft component.

As with the first 10 and second 100 embodiments of the system 10, the method 200 may enable use of sensors that do not need to integrate with existing on-board avionics, which may enable new sensors with additional and/or alternative functionality to existing sensors to be added to an aircraft in a relatively cost-effective and efficient manner, with minimal impact at an aircraft level.

Although the discussion above has focussed on monitoring aircraft components associated with the undercarriage, such as tires and brakes, it will be understood that it can be applied to any aircraft component and associated sensors. Examples include fuel tanks and associated fuel level sensors and/or fuel composition sensors. Further examples of aircraft components associated with the undercarriage, and associated sensors, include a landing gear extension/retraction mechanism, such as an oleo strut, and associated sensors such as an oleo strut pressure sensor, an oleo strut temperature sensor, an oleo strut compression angle sensor, an oleo strut compression speed sensor, and an oleo strut compression distance sensor.

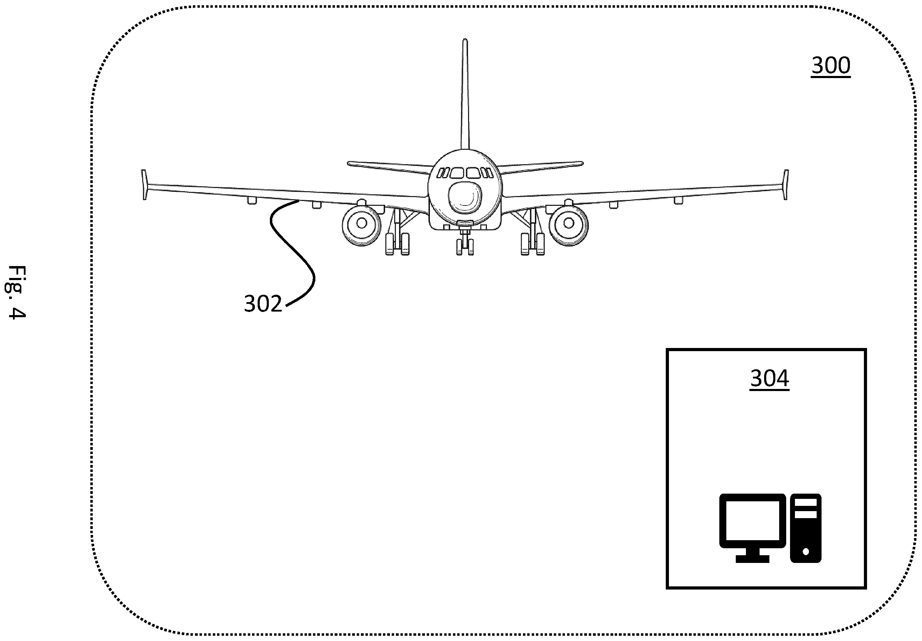

An exemplary system 300 in which the first 10 and second 100 embodiments can be practiced is illustrated in Figure 4, which shows an aircraft 302 and a computing system 304. The computing system 304 is off-board of the aircraft 302, e.g. remote from the aircraft 302.

It is to noted that the term "or" as used herein is to be interpreted to mean "and/or", unless expressly stated otherwise.

## Claims

1. A system (10) comprising:
an aircraft (12) comprising a sensor (18), an aircraft component (16) associated with the sensor (18), a first transmitter (20), and a first receiver (22); and
a computing system (14) remote from the aircraft (12), the computing system (14) comprising one or more processors (36), a second transmitter (38), and a second receiver (34):
wherein:
the aircraft is configured to transmit, via the first transmitter, sensor data (26) sensed by the sensor, to the computing system;
the computing system is configured to:
receive, via the second receiver, sensor data transmitted from the aircraft;
process, using the one or more processors, the received sensor data to generate status data (28) indicative of an operational mode of the aircraft component; and
transmit, when the status data is indicative of an altered operational mode of the aircraft component, the status data to the aircraft via the second transmitter; and
the aircraft is configured to indicate, based at least partially on the status data received by the first receiver, the altered operational mode of the aircraft component,
**characterised in that**
the computing system is configured to indicate, based at least in part on the status data, a further altered operational mode of the aircraft component, the further altered operational mode comprising a lower priority than the altered operational mode.

2. The system according to Claim 1, wherein the sensor, the first transmitter, and the first receiver are located in a first safety environment (30) on-board the aircraft, the first safety environment comprising a first development assurance level, defined as in Aerospace Recommended Practice ARP4754 from SAE International valid as of 19 January 2022, and the second transmitter , the second receiver, and the one or more processors are located in a second safety environment (42) of the computing system , the second safety environment comprising a second development assurance level the same as the first development assurance level.

3. The system according to any preceding claim, wherein the sensor, the first transmitter and the first receiver, are located in a first data security environment (32) on-board the aircraft, the first data security environment comprising a first security assurance level, defined as in Section 4.4 of document ED-203A produced by the European Organisation for Civil Aviation Equipment valid as of 19 January 2022, and the second transmitter, the second receiver, and the one or more processors are located in a second data security environment (44) of the computing system, the second data security environment comprising a second security assurance level the same as the first security assurance level.

4. The system according to Claim 1, wherein the sensor , the first transmitter, and the first receiver are located in a first safety environment (30) on-board the aircraft, the first safety environment comprising a first development assurance level, defined as in Aerospace Recommended Practice ARP4754 from SAE International valid as of 19 January 2022, and the second transmitter, the second receiver, and the one or more processors are located in a second safety environment (42) of the computing system , the second safety environment comprising a second development assurance level different to the first development assurance level, optionally wherein the second development assurance level is lower than the first development assurance level.

5. The system according to Claim 1, Claim 2, or Claim 4, wherein the sensor, the first transmitter and the first receiver, are located in a first data security environment (32) on-board the aircraft, the first data security environment comprising a first security assurance level, defined as in Section 4.4 of document ED-203A produced by the European Organisation for Civil Aviation Equipment valid as of 19 January 2022, and the second transmitter, the second receiver, and the one or more processors are located in a second data security environment (44) of the computing system , the second data security environment comprising a second security assurance level different to the first security assurance level, optionally wherein the second security assurance level is lower than the first security assurance level.

6. The system according to any preceding claim, wherein the aircraft is configured to encrypt the sensor data prior to transmitting the sensor data to the computing system via the first transmitter; and
the computing system is configured to decrypt, via the one or more processors of the computing system the sensor data received by the second receiver.

7. The system according to any preceding claim, wherein the aircraft comprises one or more on-board processors configured to process sensor data of the aircraft component to obtain on-board status data indicative of a operational mode of the aircraft component associated with the sensor, and the aircraft is configured to, based at least in part on the on-board status data, and when the on-board status data is indicative of an altered operational mode of the aircraft component, indicate the altered operational mode of the aircraft component.

8. The system according to any preceding claim, wherein:
the aircraft comprises a plurality of sensors each sensor configured to obtain respective sensor data associated with the aircraft component;
the aircraft is configured to transmit, via the first transmitter, sensor data from each of the plurality of sensors to the computing system;
the computing system is configured to receive, via the second receiver, the transmitted sensor data from each of the plurality of sensors; and
the computing system is configured to process, via the one or more processors of the computing system, the received sensor data from each of the plurality of sensors to determine the status data indicative of the altered operational mode of the aircraft component.

9. The system according to any preceding claim, wherein the sensor comprises at least one of a tire pressure monitoring sensor, a brake wear sensor, a tire tread sensor, a tire temperature sensor, a brake temperature sensor, an oleo strut pressure sensor, an oleo strut temperature sensor, an oleo strut compression angle sensor, an oleo strut compression speed sensor, and an oleo strut compression distance sensor.

10. A method (200) comprising:
obtaining (202), via a sensor on-board an aircraft, sensor data associated with an aircraft component of the aircraft;
transmitting (204) the sensor data to an off-board computing system;
processing (206), via one or more processors of the off-board computing system, the received sensor data to determine status data indicative of an operational mode of the aircraft component;
transmitting (208), from the off-board computing system to the aircraft, and when the status data is indicative of an altered operational mode of the aircraft, the status data; and
indicating (210), by the aircraft, the altered operational mode of the aircraft component;
wherein the method comprises, processing, via one or more processors of the off-board computing system, the received sensor data to determine further status data indicative of a further operational mode of the aircraft component, and indicating, where the further operational mode of the aircraft component comprises a further altered operational mode of the aircraft component, and at the off-board computing system, the further altered operational mode of the aircraft component, the further altered operational mode comprising a lower priority than the altered operational mode.

11. The method according to claim 10, wherein the method comprises scheduling, based at least in part on the status data, a maintenance action to be performed on the aircraft component.

12. The method according to Claim 10 or Claim 11, wherein the method comprises scheduling, based at least in part on the further status data, a further maintenance action to be performed on the aircraft component.

## Patentansprüche

1. System (10), umfassend:
ein Flugzeug (12), das einen Sensor (18), eine Flugzeugkomponente (16), die mit dem Sensor (18) assoziiert ist, einen ersten Sender (20) und einen ersten Empfänger (22) umfasst; und
ein Computersystem (14) fern von dem Flugzeug (12), wobei das Computersystem (14) einen oder mehrere Prozessoren (36), einen zweiten Sender (38) und einen zweiten Empfänger (34) umfasst:
wobei:
das Flugzeug konfiguriert ist zu Senden, über den ersten Sender, von Sensordaten (26), die durch den Sensor erfasst werden, zu dem Computersystem;
wobei das Computersystem konfiguriert ist zum:
Empfangen, über den zweiten Empfänger, von Sensordaten, die von dem Flugzeug gesendet werden;
Verarbeiten, unter Verwendung des einen oder der mehreren Prozessoren, der empfangenen Sensordaten, um Zustandsdaten (28) zu erzeugen, die einen Betriebsmodus der Flugzeugkomponente anzeigen; und
Senden, wenn die Zustandsdaten einen veränderten Betriebsmodus der Flugzeugkomponente anzeigen, der Zustandsdaten über den zweiten Sender zu dem Flugzeug; und
wobei das Flugzeug konfiguriert ist zum Anzeigen, mindestens teilweise basierend auf den Zustandsdaten, die in dem ersten Empfänger empfangen wurden, des veränderten Betriebsmodus der Flugzeugkomponente,
**dadurch gekennzeichnet, dass**
das Computersystem konfiguriert ist zum Anzeigen, mindestens teilweise basierend auf den Zustandsdaten, eines zusätzlich veränderten Betriebsmodus der Flugzeugkomponente, wobei der zusätzlich veränderte Betriebsmodus eine niedrigere Priorität als der veränderte Betriebsmodus umfasst.

2. System nach Anspruch 1, wobei sich der Sensor, der erste Sender und der erste Empfänger in einer ersten Betriebssicherheitsumgebung (30) an Bord des Flugzeugs befinden, wobei die erste Betriebssicherheitsumgebung eine erste Entwicklungssicherstellungsstufe, "Development Assurance Level", umfasst, die in der "Aerospace Recommended Practice ARP4754" von "SAE International", gültig seit dem 19. Januar 2022, definiert wird, und wobei sich der zweite Sender, der zweite Empfänger und der eine oder die mehreren Prozessoren in einer zweiten Betriebssicherheitsumgebung (42) des Computersystems befinden, wobei die zweite Betriebssicherheitsumgebung eine zweite Entwicklungssicherstellungsstufe umfasst, welche die gleiche ist wie die erste Entwicklungssicherstellungsstufe.

3. System nach einem der vorhergehenden Ansprüche, wobei sich der Sensor, der erste Sender und der erste Empfänger in einer ersten Datensicherheitsumgebung (32) an Bord des Flugzeugs befinden, wobei die erste Datensicherheitsumgebung eine erste Sicherheitssicherstellungsstufe, "Security Assurance Level", umfasst, die in dem Abschnitt 4.4 des Dokuments ED-203A definiert wird, das von der "European Organisation for Civil Aviation Equipment" erstellt wurde und seit dem 19. Januar 2022 gültig ist, und wobei sich der zweite Sender, der zweite Empfänger und der eine oder die mehreren Prozessoren in einer zweiten Datensicherheitsumgebung (44) des Computersystems befinden, wobei die zweite Datensicherheitsumgebung eine zweite Sicherheitssicherstellungsstufe umfasst, welche die gleiche ist wie die erste Sicherheitssicherstellungsstufe.

4. System nach Anspruch 1, wobei sich der Sensor, der erste Sender und der erste Empfänger in einer ersten Betriebssicherheitsumgebung (30) an Bord des Flugzeugs befinden, wobei die erste Betriebssicherheitsumgebung eine erste Entwicklungssicherstellungsstufe, "Development Assurance Level", umfasst, die in der "Aerospace Recommended Practice ARP4754" von "SAE International", gültig seit dem 19. Januar 2022, definiert wird, und wobei sich der zweite Sender, der zweite Empfänger und der eine oder die mehreren Prozessoren in einer zweiten Betriebssicherheitsumgebung (42) des Computersystems befinden, wobei die zweite Betriebssicherheitsumgebung eine zweite Entwicklungssicherstellungsstufe umfasst, die verschieden von der ersten Entwicklungssicherstellungsstufe ist, wobei die zweite Entwicklungssicherstellungsstufe optional niedriger als die erste Entwicklungssicherstellungsstufe ist.

5. System nach Anspruch 1, Anspruch 2 oder Anspruch 4, wobei sich der Sensor, der erste Sender und der erste Empfänger in einer ersten Datensicherheitsumgebung (32) an Bord des Flugzeugs befinden, wobei die erste Datensicherheitsumgebung eine erste Sicherheitssicherstellungsstufe, "Security Assurance Level", umfasst, die in dem Abschnitt 4.4 des Dokuments ED-203A definiert wird, das von der "European Organisation for Civil Aviation Equipment" erstellt wurde und seit dem 19. Januar 2022 gültig ist, und wobei sich der zweite Sender, der zweite Empfänger und der eine oder die mehreren Prozessoren in einer zweiten Datensicherheitsumgebung (44) des Computersystems befinden, wobei die zweite Datensicherheitsumgebung eine zweite Sicherheitssicherstellungsstufe umfasst, die verschieden von der ersten Sicherheitssicherstellungsstufe ist, wobei die zweite Sicherheitssicherstellungsstufe optional niedriger als die erste Sicherheitssicherstellungsstufe ist.

6. System nach einem der vorhergehenden Ansprüche, wobei das Flugzeug konfiguriert ist zum Verschlüsseln der Sensordaten vor dem Senden der Sensordaten über den ersten Sender zu dem Computersystem; und
wobei das Computersystem konfiguriert ist zum Entschlüsseln, über den einen oder die mehreren Prozessoren des Computersystems, der Sensordaten, die in dem zweiten Empfänger empfangen werden.

7. System nach einem der vorhergehenden Ansprüche, wobei das Flugzeug einen oder mehrere bordeigene Prozessoren umfasst, die konfiguriert sind zum Verarbeiten der Sensordaten der Flugzeugkomponente, um bordeigene Zustandsdaten zu erhalten, die einen Betriebsmodus der Flugzeugkomponente anzeigen, die mit dem Sensor assoziiert ist, und wobei das Flugzeug konfiguriert ist zum, mindestens teilweise basierend auf den bordeigenen Zustandsdaten und wenn die bordeigenen Zustandsdaten einen veränderten Betriebsmodus der Flugzeugkomponente anzeigen, Anzeigen des veränderten Betriebsmodus der Flugzeugkomponente.

8. System nach einem der vorhergehenden Ansprüche, wobei:
das Flugzeug eine Vielzahl von Sensoren umfasst, wobei jeder Sensor konfiguriert ist zum Erhalten entsprechender Sensordaten, die mit der Flugzeugkomponente assoziiert sind;
das Flugzeug konfiguriert ist zum Senden, über den ersten Sender, von Sensordaten von jedem aus der Vielzahl von Sensoren zu dem Computersystem;
das Computersystem konfiguriert ist zum Empfangen, über den zweiten Empfänger, der gesendeten Sensordaten von jedem aus der Vielzahl von Sensoren; und
das Computersystem konfiguriert ist zum Verarbeiten, durch den einen oder die mehreren Prozessoren des Computersystems, der empfangenen Sensordaten von jedem aus der Vielzahl von Sensoren, um die Zustandsdaten zu ermitteln, die den veränderten Betriebsmodus der Flugzeugkomponente anzeigen.

9. System nach einem der vorhergehenden Ansprüche, wobei der Sensor mindestens einen von einem Reifendrucküberwachungssensor, einem Bremsabnutzungssensor, einem Reifenprofilsensor, einem Reifentemperatursensor, einem Bremstemperatursensor, einem Ölfederbeindrucksensor, einem Ölfederbeintemperatursensor, einem Winkelsensor für eine Ölfederbeinkompression, einem Geschwindigkeitssensor für eine Ölfederbeinkompression und einem Abstandssensor für eine Ölfederbeinkompression umfasst.

10. Verfahren (200), umfassend:
Erhalten (202), über einen Sensor an Bord eines Flugzeugs, von Sensordaten, die mit einer Flugzeugkomponente des Flugzeugs assoziiert sind;
Senden (204) der Sensordaten zu einem bordfernen Computersystem;
Verarbeiten (206), durch einen oder mehrere Prozessoren des bordfernen Computersystems, der empfangenen Sensordaten, um Zustandsdaten zu ermitteln, die einen Betriebsmodus der Flugzeugkomponente anzeigen;
Senden (208), von dem bordfernen Computersystem zu dem Flugzeug und wenn die Zustandsdaten einen veränderten Betriebsmodus des Flugzeugs anzeigen, der Zustandsdaten; und
Anzeigen (210), durch das Flugzeug, des veränderten Betriebsmodus der Flugzeugkomponente;
wobei das Verfahren umfasst: Verarbeiten, durch einen oder mehrere Prozessoren des bordfernen Computersystems, der empfangenen Sensordaten, um zusätzliche Zustandsdaten zu ermitteln, die einen zusätzlichen Betriebsmodus der Flugzeugkomponente anzeigen, und Anzeigen, wenn der veränderte Betriebsmodus der Flugzeugkomponente einen zusätzlich veränderten Betriebsmodus der Flugzeugkomponente umfasst und in dem bordfernen Computersystem, des zusätzlich veränderten Betriebsmodus der Flugzeugkomponente, wobei der zusätzlich veränderte Betriebsmodus eine niedrigere Priorität als der veränderte Betriebsmodus umfasst.

11. Verfahren nach Anspruch 10, wobei das Verfahren ein Planen, mindestens teilweise basierend auf den Zustandsdaten, einer an der Flugzeugkomponente durchzuführenden Wartungsaktion umfasst.

12. Verfahren nach Anspruch 10 oder Anspruch 11, wobei das Verfahren ein Planen, mindestens teilweise basierend auf den zusätzlichen Zustandsdaten, einer zusätzlichen an der Flugzeugkomponente durchzuführenden Wartungsaktion umfasst.

## Revendications

1. Système (10) comprenant :
un aéronef (12) comprenant un capteur (18), un composant d'aéronef (16) associé au capteur (18), un premier émetteur (20) et un premier récepteur (22) ; et
un système informatique (14) distant de l'aéronef (12), le système informatique (14) comprenant un ou plusieurs processeurs (36), un deuxième émetteur (38) et un deuxième récepteur (34) :
dans lequel :
l'aéronef est configuré pour transmettre, par l'intermédiaire du premier émetteur, des données de capteur (26) détectées par le capteur, au système informatique ;
le système informatique est configuré pour :
recevoir, par l'intermédiaire du deuxième récepteur, les données de capteur transmises par l'aéronef ;
traiter, à l'aide d'un ou plusieurs processeurs, les données de capteur reçues pour générer des données d'état (28) indicatives d'un mode de fonctionnement du composant de l'aéronef ; et
transmettre, lorsque les données d'état sont indicatives d'un mode de fonctionnement altéré du composant de l'aéronef, les données d'état à l'aéronef par l'intermédiaire du deuxième émetteur ; et
l'aéronef est configuré pour indiquer, en se basant au moins en partie sur les données d'état reçues par le premier récepteur, le mode de fonctionnement altéré du composant de l'aéronef,
**caractérisé en ce que**
le système informatique est configuré pour indiquer, sur la base, au moins en partie, des données d'état, un autre mode de fonctionnement altéré du composant de l'aéronef, l'autre mode de fonctionnement altéré ayant une priorité inférieure à celle du mode de fonctionnement altéré.

2. Système selon la revendication 1, dans lequel le capteur, le premier émetteur et le premier récepteur sont situés dans un premier environnement de sécurité (30) à bord de l'aéronef, le premier environnement de sécurité comprenant un premier niveau d'assurance de développement, défini comme dans la pratique recommandée aérospatiale ARP4754 de SAE International valable à partir du 19 janvier 2022, et le deuxième émetteur, le deuxième récepteur et les un ou plusieurs processeurs sont situés dans un deuxième environnement de sécurité (42) du système informatique, le deuxième environnement de sécurité comprenant un deuxième niveau d'assurance de développement identique au premier niveau d'assurance de développement.

3. Système selon l'une quelconque des revendications précédentes, dans lequel le capteur, le premier émetteur et le premier récepteur sont situés dans un premier environnement de sécurité des données (32) à bord de l'aéronef, le premier environnement de sécurité des données comprenant un premier niveau d'assurance de sécurité, défini comme dans la section 4.4 du document ED-203A produit par l'organisation européenne pour l'équipement de l'aviation civile valable à partir du 19 janvier 2022, et le deuxième émetteur, le deuxième récepteur et les un ou plusieurs processeurs sont situés dans un deuxième environnement de sécurité des données (44) du système informatique, le deuxième environnement de sécurité des données comprenant un deuxième niveau d'assurance de sécurité identique au premier niveau d'assurance de sécurité.

4. Système selon la revendication 1, dans lequel le capteur, le premier émetteur et le premier récepteur sont situés dans un premier environnement de sécurité (30) à bord de l'aéronef, le premier environnement de sécurité comprenant un premier niveau d'assurance de développement, défini comme dans la pratique recommandée aérospatiale ARP4754 de SAE International valable à partir du 19 janvier 2022, et le deuxième émetteur, le deuxième récepteur et les un ou plusieurs processeurs sont situés dans un deuxième environnement de sécurité (42) du système informatique, le deuxième environnement de sécurité comprenant un deuxième niveau d'assurance de développement différent du premier niveau d'assurance de développement, éventuellement dans lequel le deuxième niveau d'assurance de développement est inférieur au premier niveau d'assurance de développement.

5. Système selon la revendication 1, la revendication 2 ou la revendication 4, dans lequel le capteur, le premier émetteur et le premier récepteur sont situés dans un premier environnement de sécurité des données (32) à bord de l'aéronef, le premier environnement de sécurité des données comprenant un premier niveau d'assurance de sécurité, défini comme dans la section 4.4 du document ED-203A produit par l'organisation européenne pour l'équipement de l'aviation civile valable à partir du 19 janvier 2022, et le deuxième émetteur, le deuxième récepteur et les un ou plusieurs processeurs sont situés dans un deuxième environnement de sécurité des données (44) du système informatique, le deuxième environnement de sécurité des données comprenant un deuxième niveau d'assurance de sécurité différent du premier niveau d'assurance de sécurité, éventuellement dans lequel le deuxième niveau d'assurance de sécurité est inférieur au premier niveau d'assurance de sécurité.

6. Système selon l'une quelconque des revendications précédentes, dans lequel l'aéronef est configuré pour crypter les données du capteur avant de transmettre les données du capteur au système informatique par l'intermédiaire du premier émetteur ; et
le système informatique est configuré pour décrypter, par l'intermédiaire des un ou plusieurs processeurs du système informatique, les données du capteur reçues par le deuxième récepteur.

7. Système selon l'une quelconque des revendications précédentes, dans lequel l'aéronef comprend un ou plusieurs processeurs embarqués configurés pour traiter les données de capteur du composant de l'aéronef afin d'obtenir des données d'état embarquées indicatives d'un mode de fonctionnement du composant de l'aéronef associé au capteur, et l'aéronef est configuré pour, sur la base au moins en partie des données d'état embarquées, et lorsque les données d'état embarquées sont indicatives d'un mode de fonctionnement altéré du composant de l'aéronef, indiquer le mode de fonctionnement altéré du composant de l'aéronef.

8. Système selon l'une quelconque des revendications précédentes, dans lequel :
l'aéronef comprend une pluralité de capteurs, chaque capteur étant configuré pour obtenir des données de capteur respectives associées au composant de l'aéronef ;
l'aéronef est configuré pour transmettre, au système informatique, par l'intermédiaire du premier émetteur, des données de capteur provenant de chacun de la pluralité de capteurs ;
le système informatique est configuré pour recevoir, par l'intermédiaire du deuxième récepteur, les données de capteur transmises provenant de chacun de la pluralité de capteurs ; et
le système informatique est configuré pour traiter, par l'intermédiaire des un ou plusieurs processeurs du système informatique, les données de capteur reçues de chacun de la pluralité de capteurs afin de déterminer les données d'état indicatives du mode de fonctionnement altéré du composant de l'aéronef.

9. Système selon l'une quelconque des revendications précédentes, dans lequel le capteur comprend au moins l'un des éléments suivants : un capteur de surveillance de la pression des pneus, un capteur d'usure des freins, un capteur de bande de roulement des pneus, un capteur de température des pneus, un capteur de température des freins, un capteur de pression des jambes de force oléopneumatiques, un capteur de température des jambes de force oléopneumatiques, un capteur d'angle de compression des jambes de force oléopneumatiques, un capteur de vitesse de compression des jambes de force oléopneumatiques et un capteur de distance de compression des jambes de force oléopneumatiques.

10. Procédé (200) comprenant les étapes suivantes :
obtenir (202), par l'intermédiaire d'un capteur embarqué à bord d'un aéronef, des données de capteur associées à un composant de l'aéronef ;
transmettre (204) les données de capteur à un système informatique externe ;
traiter (206), par l'intermédiaire des un ou plusieurs processeurs du système informatique externe, les données de capteur reçues pour déterminer des données d'état indicatives d'un mode de fonctionnement du composant de l'aéronef ;
transmettre (208), du système informatique externe à l'aéronef, et lorsque les données d'état indiquent un mode de fonctionnement altéré de l'aéronef, les données d'état ; et
indiquer (210), par l'aéronef, le mode de fonctionnement altéré du composant de l'aéronef ;
le procédé comprenant le traitement, par l'intermédiaire d'un ou plusieurs processeurs du système informatique externe, des données de capteur reçues pour déterminer d'autres données d'état indicatives d'un autre mode de fonctionnement du composant de l'aéronef, et l'indication, lorsque l'autre mode de fonctionnement du composant de l'aéronef comprend un autre mode de fonctionnement modifié du composant de l'aéronef, et au niveau du système informatique externe, de l'autre mode de fonctionnement modifié du composant de l'aéronef, l'autre mode de fonctionnement modifié ayant une priorité inférieure à celle du mode de fonctionnement modifié.

11. Procédé selon la revendication 10, dans lequel le procédé comprend la planification, sur la base, au moins en partie, des données d'état, d'une action de maintenance à effectuer sur le composant de l'aéronef.

12. Procédé selon la revendication 10 ou la revendication 11, dans lequel le procédé comprend la planification, sur la base, au moins en partie, des données d'état supplémentaires, d'une action de maintenance supplémentaire à effectuer sur le composant de l'aéronef.
